(19) Europäisches Patentamt
European Patent Office
Office européen des brevets

(11) EP 4 265 653 A1

(12) EUROPEAN PATENT APPLICATION
published in accordance with Art. 153(4) EPC

(43) Date of publication:
**25.10.2023 Bulletin 2023/43**

(21) Application number: **21906994.5**

(22) Date of filing: **10.12.2021**

(51) International Patent Classification (IPC):
***C08F 210/16*** *(2006.01)* ***C08F 210/14*** *(2006.01)*
***C08F 4/659*** *(2006.01)* ***C08F 4/6592*** *(2006.01)*
***C08F 4/646*** *(2006.01)* ***C08F 4/02*** *(2006.01)*

(52) Cooperative Patent Classification (CPC):
**C08F 4/02; C08F 4/646; C08F 4/659; C08F 4/6592; C08F 210/14; C08F 210/16**

(86) International application number:
**PCT/KR2021/018720**

(87) International publication number:
**WO 2022/131690 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2020 KR 20200177009**

(71) Applicant: **Hanwha Solutions Corporation**
**Jung-gu**
**Seoul 04541 (KR)**

(72) Inventors:
- **KIM, Sung Dong**
  **Daejeon 34128 (KR)**
- **LEE, Munhee**
  **Daejeon 34128 (KR)**
- **JOUNG, Ui Gap**
  **Daejeon 34128 (KR)**
- **PARK, Jeong Hyun**
  **Daejeon 34128 (KR)**
- **SEO, Junho**
  **Daejeon 34128 (KR)**
- **LIM, Seongjae**
  **Daejeon 34128 (KR)**
- **JO, Jisong**
  **Daejeon 34128 (KR)**
- **PARK, Hye Ran**
  **Daejeon 34128 (KR)**

(74) Representative: **Berggren Oy**
**P.O. Box 16**
**Eteläinen Rautatiekatu 10A**
**00101 Helsinki (FI)**

# (54) OLEFINIC POLYMER, AND METHOD FOR PREPARING SAME

(57) The present invention relates to an olefin-based polymer, and a method for preparing the same. The olefin-based polymer according to an embodiment of the present invention has a wide molecular weight distribution and thus has excellent processability. Moreover, a relatively large number of short-chain branches are present in high molecular weight components of the olefin-based polymer, and thus the olefin-based polymer has excellent mechanical strength and heat-sealing properties.

EP 4 265 653 A1

## Description

[Technical Field]

The present invention relates to an olefin-based polymer and a method for preparing the same. Specifically, the present invention relates to an olefin-based polymer having excellent mechanical strength and a method for preparing the same.

[Background Art]

A metallocene catalyst which is one of the catalysts used in olefin polymerization, which is a compound in which a ligand such as cyclopentadienyl, indenyl, or cycloheptadienyl is coordinated to a transition metal compound or a transition metal halogen compound, has a sandwich structure as a basic form.

A Ziegler-Natta catalyst which is another catalyst used for polymerizing olefins has heterogeneous properties of an active site, since a metal component as an active site is dispersed on an inert solid surface; however, the metallocene catalyst is known as a single-site catalyst having identical polymerization properties in all active sites, since it is one compound having a certain structure. A polymer polymerized with the metallocene catalyst as such has a narrow molecular weight distribution, a uniform comonomer distribution, and copolymerization activity higher than the Ziegler Natta catalyst.

Meanwhile, a linear low-density polyethylene (LLDPE) is prepared by copolymerizing ethylene and $\alpha$-olefin at a low pressure using a polymerization catalyst, has a narrow molecular weight distribution and a short chain branch (SCB) having a certain length, and does not have a long chain branch (LCB) in general. A film prepared with a linear low-density polyethylene has high breaking strength and elongation, and excellent tear strength, impact strength, and the like, together with general properties of polyethylene, and thus, is widely used in a stretch film, an overlap film, and the like to which it is conventionally difficult to apply low-density polyethylene or high-density polyethylene.

However, the linear low-density polyethylene prepared by a metallocene catalyst has poor processability due to a narrow molecular weight distribution, and a film prepared therefrom tends to have reduced heat seal properties.

Therefore, an olefin-based polymer which allows preparation of a film which has excellent mechanical strength and heat seal properties while having excellent processability, is being demanded.

## [Disclosure]

[Technical Problem]

An object of the present invention is to provide an olefin-based polymer which allows preparation of an olefin-based polymer film which has excellent mechanical strength and heat seal properties while having excellent processability.

Another object of the present invention is to provide a method for preparing the olefin-based polymer.

[Technical Solution]

In one general aspect, an olefin-based polymer which has (1) a density of 0.915 to 0.935 g/cm$^3$, preferably 0.918 to 0.932 g/cm$^3$; (2) a ratio between a melt index ($I_{21.6}$) measured with a load of 21.6 kg and a melt index ($I_{2.16}$) measured with a load of 2.16 kg at 190°C (melt flow ratio; MFR) of 15 or more, preferably 15 to 40; and (3) a comonomer distribution slope (CDS) defined by the following Equation 1 of 1.0 or more, preferably 1.0 to 3.0:

[Equation 1]

$$\mathrm{CDS} = \frac{logC_{80} - logC_{20}}{logM_{80} - logM_{20}}$$

wherein $C_{20}$ and $C_{80}$ are comonomer contents at points where cumulative weight fractions are 20% and 80%, respectively, in a comonomer distribution, and $M_{20}$ and $M_{80}$ are molecular weights at points where cumulative weight fractions are 20% and 80%, respectively, in a comonomer distribution.

In a specific example of the present invention, the olefin-based polymer may be prepared by polymerizing an olefin-based monomer in the presence of a hybrid catalyst including at least one first transition metal compound represented by the following Chemical Formula 1; and at least one second transition metal compound represented by the following Chemical Formula 2:

[Chemical Formula 1]

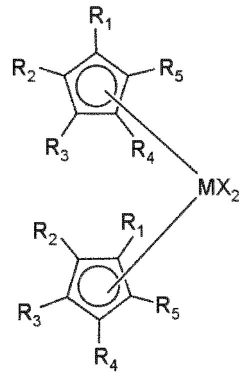

[Chemical Formula 2]

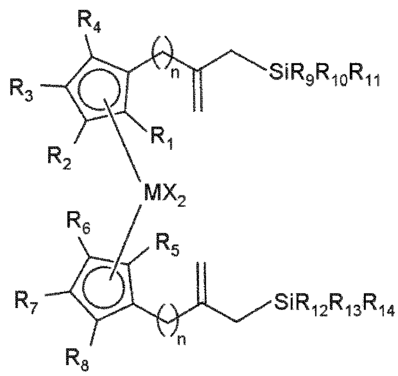

wherein n is independently of each other an integer of 1 to 20,

M is independently of each other titanium (Ti), zirconium (Zr), or hafnium (Hf),

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,

$R_1$ to $R_8$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, and

$R_9$ to $R_{11}$ and $R_{12}$ to $R_{14}$ are independently of one another substituted or unsubstituted $C1_{-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, but

$R_1$ to $R_8$ may be independently of one another connected to an adjacent group to form a substituted or unsubstituted and saturated or unsaturated $C_{4-20}$ ring.

In a specific example of the present invention, M may be zirconium or hafnium, respectively, X may be halogen or $C_{1-20}$ alkyl, respectively, $R_1$ to $R_8$ may be hydrogen, substituted or unsubstituted $C_{1-20}$ alkyl, substituted or unsubstituted $C_{1-20}$ alkenyl, or substituted or unsubstituted $C_{6-20}$ aryl, respectively, and $R_9$ to $R_{11}$ and $R_{12}$ to $R_{14}$ may be substituted or unsubstituted $C_{1-20}$ alkyl, respectively.

In a preferred specific example of the present invention, the first transition metal compound may be at least

one of transition metal compounds represented by the following Chemical Formulae 1-1 to 1-3, and the second transition metal compound may be a transition metal compound represented by the following Chemical Formula 2-1:

[Chemical Formula 1-1] [Chemical Formula 1-2]

[Chemical Formula 1-3]

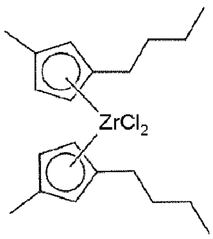
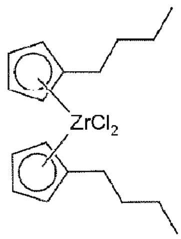
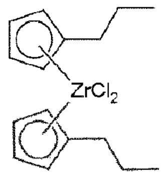

[Chemical Formula 2-1]

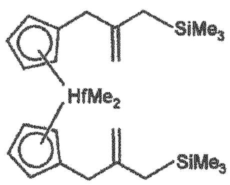

wherein Me is a methyl group.

In a specific example of the present invention, a mole ratio of the first transition metal compound to the second transition metal compound is in a range of 100:1 to 1:100.

In a specific example of the present invention, the catalyst may include at least one cocatalyst selected from the group consisting of a compound represented by the following Chemical Formula 3, a compound represented by the following Chemical Formula 4, and a compound represented by the following Chemical Formula 5:

[Chemical Formula 3]

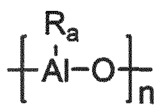

[Chemical Formula 4]

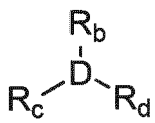

[Chemical Formula 5] $[L-H]^+[Z(A)_4]^-$ or $[L]^+[Z(A)_4]^-$

wherein n is an integer of 2 or more, $R_a$ is a halogen atom, a $C_{1-20}$ hydrocarbon group, or a $C_{1-20}$ hydrocarbon group substituted with halogen,

D is aluminum (Al) or boron (B), $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group,

L is a neutral or cationic Lewis base, $[L-H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group.

In a specific example of the present invention, the catalyst may further include a carrier which supports a transition metal compound, a cocatalyst compound, or both of them.

In a preferred specific example of the present invention, the carrier may include at least one selected from the group consisting of silica, alumina, and magnesia.

Herein, a total amount of the hybrid transition metal compound supported on the carrier may be 0.001 to 1 mmol based on 1 g of the carrier, and a total amount of the cocatalyst compound supported on the carrier may be 2 to 15 mmol based on 1 g of the carrier.

In a specific example of the present invention, the olefin-based polymer may be a copolymer of an olefin-based monomer and an olefin-based comonomer. Specifically, the olefin-based monomer may be ethylene, and the olefin-based comonomer may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Preferably, the olefin-based polymer may be a linear low-density polyethylene in which the olefin-based polymer is ethylene and the olefin-based monomer is 1-hexene.

In another general aspect, a method for preparing an olefin-based polymer includes: polymerizing an olefin-based monomer in the presence of a hybrid catalyst including: at least one first transition metal compound represented by Chemical Formula 1; and at least one second transition metal compound represented by Chemical Formula 2, thereby obtaining an olefin-based polymer, wherein the olefin-based polymer has (1) a density of 0.915 to 0.935 g/cm$^3$, preferably 0.918 to 0.932 g/cm$^3$; (2) a ratio between a melt index ($I_{21.6}$) measured with a load of 21.6 kg and a melt index ($I_{2.16}$) measured with a load of 2.16 kg at 190°C (melt flow ratio; MFR) of 15 or more, preferably 15 to 40; and (3) a comonomer distribution slope (CDS) defined by the Equation 1 of 1.0 or more, preferably 1.0 to 3.0.

In a specific example of the present invention, polymerization of the olefin-based monomer may be performed by slurry polymerization, and specifically, the polymerization of the olefin-based monomer may be performed in a slurry batch reactor.

[Advantageous Effects]

The olefin-based polymer according to an exemplary embodiment of the present invention has a wide molecular weight distribution and thus has excellent processability. Moreover, a relatively large number of short-chain branches are present in high molecular weight components of the olefin-based polymer, and thus the olefin-based polymer has excellent mechanical strength and heat-sealing properties.

[Description of Drawings]

FIG. 1 is a GPC-FTIR graph for describing a method for measuring CDS defined by Equation 1.
FIGS. 2 to 9 are GPC-FTIR graphs for measuring CDS of olefin-based polymers of Examples 1 to 8, respectively.
FIGS. 10 and 11 are GPC-FTIR graphs for measuring CDS of olefin-based polymers of Comparative Examples 1 and 2, respectively.

[Best Mode]

Hereinafter, the present invention will be described in more detail.

**Olefin-based polymer**

According to an exemplary embodiment of the present invention, an olefin-based polymer which has (1) a density of 0.915 to 0.935 g/cm$^3$; (2) a ratio between a melt index ($I_{21.6}$) measured with a load of 21.6 kg and a melt index ($I_{2.16}$) measured with a load of 2.16 kg at 190°C (melt flow ratio; MFR) of 15 or more; and (3) a comonomer distribution slope (CDS) defined by the Equation 1 of 1.0 or more is provided.

In a specific example of the present invention, the olefin-based polymer has the density of 0.915 to 0.935 g/cm$^3$. Preferably, the olefin-based polymer may have the density of 0.918 to 0.932 g/cm$^3$.

In a specific example of the present invention, the olefin-based polymer may have the ratio between a melt index ($I_{21.6}$) measured with a load of 21.6 kg and a melt index ($I_{2.16}$) measured with a load of 2.16 kg at 190°C (melt flow ratio; MFR) of 15 or more. Preferably, the olefin-based polymer may have the MFR of 15 to 40.

In a specific example of the present invention, the olefin-based polymer may have the comonomer distribution slope (CDS) defined by the following Equation 1 of 1.0 or more. Preferably, the olefin-based polymer may have the CDS of 1.0 to 3.0.

[Equation 1]

$$\mathrm{CDS} = \frac{logC_{80} - logC_{20}}{logM_{80} - logM_{20}}$$

wherein $C_{20}$ and $C_{80}$ are comonomer contents at points where cumulative weight fractions are 20% and 80%, respectively, in a comonomer distribution, and $M_{20}$ and $M_{80}$ are molecular weights at points where cumulative weight fractions are 20% and 80%, respectively, in a comonomer distribution.

The CDS of the olefin-based polymer represents a slope of a comonomer content to a molecular weight at points where cumulative weight fractions are 20% and 80%, respectively, in a comonomer distribution graph. As the CDS of the olefin-based polymer is higher, a copolymer is concentrated on a polymer chain having a higher molecular weight, so that mechanical strength and heat seal properties may be excellent.

Herein, the comonomer distribution of the olefin-based polymer may be continuously measured with the molecular weight and the molecular weight distribution of the polymer, using GPC-FTIR equipment.

It is understood that since the olefin-based polymer according to an exemplary embodiment of the present invention has a relatively large molecular weight distribution and has more short chain branches in a high molecular weight component, the mechanical strength and heat seal properties of the olefin-based polymer film manufactured therefrom are excellent.

In a specific example of the present invention, the olefin-based polymer may be prepared by polymerizing an olefin-based monomer in the presence of a hybrid catalyst including: at least one first transition metal compound represented by the following Chemical Formula 1; and at least one second transition metal compound represented by the following Chemical Formula 2:

[Chemical Formula 1]

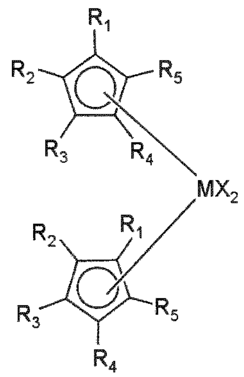

[Chemical Formula 2]

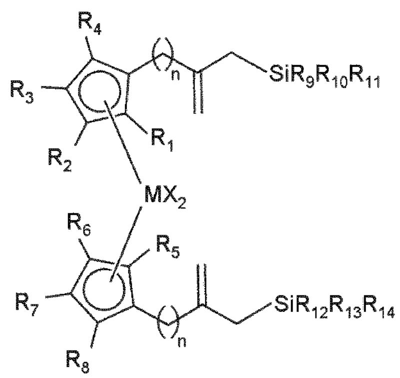

wherein n is independently of each other an integer of 1 to 20, preferably an integer of 1 to 10, and more specifically an

integer of 1 to 5. Specifically, n may be 1 or 2, respectively.

M is independently of each other titanium (Ti), zirconium (Zr), or hafnium (Hf). Specifically, M may be zirconium or hafnium, respectively.

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido. Specifically, X may be halogen or $C_{1-20}$ alkyl, respectively. Preferably, X may be chlorine or methyl.

$R_1$ to $R_8$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, in which $R_1$ to $R_8$ may be independently of each other connected to an adjacent group to form a substituted or unsubstituted and saturated or unsaturated $C_{4-20}$ ring. Specifically, $R_1$ to $R_8$ may be hydrogen, substituted or unsubstituted $C_{1-20}$ alkyl, substituted or unsubstituted $C_{1-20}$ alkenyl, or substituted or unsubstituted $C_{6-20}$ aryl, respectively.

$R_9$ to $R_{11}$ and $R_{12}$ to $R_{14}$ are independently of one another substituted or unsubstituted $C1_{-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl. Specifically, Rg to $R_{11}$ and $R_{12}$ to $R_{14}$ may be independently of one another substituted or unsubstituted $C_{1-20}$ alkyl or substituted or unsubstituted $C_{6-20}$ aryl. Preferably, $R_9$ to $R_{11}$ and $R_{12}$ to $R_{14}$ may be methyl, respectively.

In a specific example of the present invention, M may be zirconium or hafnium, respectively, X may be halogen or $C_{1-20}$ alkyl, respectively, $R_1$ to $R_8$ may be hydrogen, substituted or unsubstituted $C_{1-20}$ alkyl, substituted or unsubstituted $C_{1-20}$ alkenyl, or substituted or unsubstituted $C_{6-20}$ aryl, respectively, and $R_9$ to $R_{11}$ and $R_{12}$ to $R_{14}$ may be substituted or unsubstituted $C_{1-20}$ alkyl, respectively.

In a preferred specific example of the present invention, the first transition metal compound may be at least one of transition metal compounds represented by the following Chemical Formulae 1-1 to 1-3, and the second transition metal compound may be a transition metal compound represented by the following Chemical Formula 2-1:

[Chemical Formula 1-1] [Chemical Formula 1-2]

[Chemical Formula 1-3]

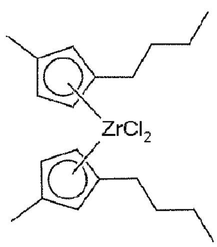

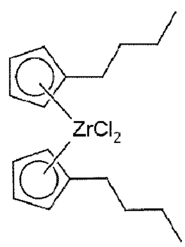

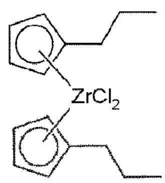

[Chemical Formula 2-1]

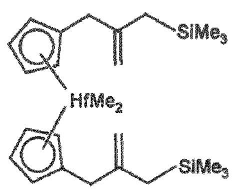

wherein Me is a methyl group.

In a specific example of the present invention, a mole ratio of the first transition metal compound to the second transition metal compound is in a range of 100:1 to 1:100. Preferably, a mole ratio of the first transition metal compound to the second transition metal compound is in a range of 50:1 to 1:50. Preferably, a mole ratio of the first transition metal compound to the second transition metal compound is in a range of 10:1 to 1:10.

In a specific example of the present invention, the catalyst may include at least one cocatalyst compound selected from the group consisting of a compound represented by the following Chemical Formula 3, a compound represented by the following Chemical Formula 4, and a compound represented by the following Chemical Formula 5:

[Chemical Formula 3]

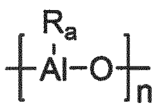

wherein n is an integer of 2 or more, $R_a$ is a halogen atom, $C_{1-20}$ hydrocarbon, or $C_{1-20}$ hydrocarbon substituted with halogen, and specifically, $R_a$ may be methyl, ethyl, n-butyl, or isobutyl,

[Chemical Formula 4]

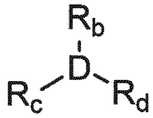

wherein D is aluminum (Al) or boron (B), and $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group, and specifically, when D is aluminum (Al), $R_b$, $R_c$, and $R_d$ may be independently of one another methyl or isobutyl, and when D is boron (B), $R_b$, $R_c$, and $R_d$ may be pentafluorophenyl, respectively,

[Chemical Formula 5] $[L\text{-}H]^+[Z(A)_4]^-$ or $[L]^+[Z(A)_4]^-$

wherein L is a neutral or cationic Lewis base, $[L\text{-}H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group, and specifically, $[L\text{-}H]^+$ may be dimethylanilinium cation, $[Z(A)_4]^-$ may be $[B(C_6F_5)_4]^-$, and $[L]^+$ may be $[(C_6H_5)_3C]^+$.

Specifically, an example of the compound represented by Chemical Formula 3 includes methylaluminoxane, ethylaluminoxane, isobutylaluminoxane, butylaluminoxane, and the like, and is preferably methylaluminoxane, but is not limited thereto.

An example of the compound represented by Chemical Formula 4 includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 5 includes triethylammoniumtetraphenylboron, tributylammoniumtetraphenylboron, trimethylammoniumtetraphenylboron, tripropylammoniumtetraphenylboron, trimethylammoniumtetra(*p*-tolyl)boron, trimethylammoniumtetra(*o*,*p*-dimethylphenyl)boron, tributylammoniumtetra(*p*-trifluoromethylphenyl)boron, trimethylammoniumtetra(*p*-trifluoromethylphenyl)boron, tributylammoniumtetrapentafluorophenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(*p*-tolyl)aluminum, tripropylammoniumtetra(*p*-tolyl)aluminum, triethylammoniumtetra(*o*,*p*-dimethylphenyl) aluminum, tributylammoniumtetra(*p*-trifluoromethylphenyl)aluminum, trimethylammoniumtetra(*p*-trifluoromethylphenyl)aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentatetraphenylaluminum, triphenylphosphoniumtetraphenylaluminum, trimethylphosphoniumtetraphenylaluminum, tripropylammoniumtetra(*p*-tolyl)boron, triethylammoniumtetra(*o*,*p*-dimethylphenyl)boron, tributylammoniumtetra(*p*-trifluoromethylphenyl)boron, triphenylcarboniumtetra(*p*-trifluoromethylphenyl)boron, triphenylcarboniumtetrapentafluorophenylboron, and the like.

In a specific example of the present invention, the catalyst may further include a carrier which supports a transition metal compound, a cocatalyst compound, or both of them. Specifically, the carrier may support both the transition metal compound and the cocatalyst compound.

Herein, the carrier may include a material containing a hydroxyl group on the surface, and preferably, may use a material having highly reactive hydroxyl group and siloxane group which is dried to remove moisture from the surface. For example, the carrier may include at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as $Na_2O$, $K_2CO_3$, $BaSO_4$, and $Mg(NO_3)_2$. In addition, these may include carbon, zeolite, magnesium chloride, and the like. However, the carrier is not limited thereto, and is not particularly limited as long as it may support a transition metal compound and a cocatalyst compound.

The carrier may have an average particle size of 10 to 250 um, preferably 10 to 150 um, and more preferably 20 to 100 $\mu$m.

The carrier may have a micropore volume of 0.1 to 10 cc/g, preferably 0.5 to 5 cc/g, and more preferably 1.0 to 3.0 cc/g.

The carrier may have a specific surface area of 1 to 1,000 $m^2$/g, preferably 100 to 800 $m^2$/g, and more preferably 200 to 600 $m^2$/g.

In a preferred specific example of the present invention, the carrier may be silica. Herein, a drying temperature of the silica may be 200 to 900°C. The drying temperature may be 300 to 800°C, and more preferably 400 to 700°C. When the drying temperature is lower than 200°C, silica has too much moisture so that the moisture on the surface reacts with the cocatalyst compound, and when the drying temperature is higher than 900°C, the structure of the carrier may collapse.

A concentration of a hydroxyl group in dried silica may be 0.1 to 5 mmol/g, preferably 0.7 to 4 mmol/g, and more preferably 1.0 to 2 mmol/g. When the concentration of the hydroxyl group is less than 0.1 mmol/g, the supported amount of a first cocatalyst compound is lowered, and when the concentration is more than 5 mmol/g, the catalyst component becomes inactive.

The total amount of the transition metal compound supported on the carrier may be 0.001 to 1 mmol based on 1 g of the carrier. When a ratio between the transition metal compound and the carrier satisfies the above range, appropriate supported catalyst activity is shown, which is advantageous in terms of the activity maintenance of a catalyst and economic feasibility.

The total amount of the cocatalyst compound supported on the carrier may be 2 to 15 mmol based on 1 g of the carrier. When the ratio of the cocatalyst compound and the carrier satisfies the above range, it is advantageous in terms of the activity maintenance of a catalyst and economic feasibility.

The carrier may be one or two or more. For example, both the transition metal compound and the cocatalyst compound may be supported on one carrier, or each of the transition metal compound and the cocatalyst compound may be supported on two or more carriers. In addition, only one of the transition metal compound and the cocatalyst compound may be supported on the carrier.

As a method for supporting the transition metal compound and/or the cocatalyst compound which may be used in the catalyst for olefin polymerization, a physical adsorption method or a chemical adsorption method may be used.

For example, the physical adsorption method may be a method including bringing a solution in which a transition metal compound is dissolved into contact with a carrier and then drying, a method including bringing a solution in which a transition metal compound and a cocatalyst compound are dissolved into contact with a carrier and then drying, a method including bringing a solution in which a transition metal compound is dissolved into contact with a carrier and then drying to prepare a carrier on which the transition metal compound is supported, separately bringing a solution in which a cocatalyst compound is dissolved into contact with a carrier and then drying to prepare a carrier on which the cocatalyst compound is supported, and then mixing them, or the like.

The chemical adsorption method may be a method including first supporting a cocatalyst compound on the surface of a carrier and then supporting a transition metal compound on the cocatalyst compound, a method including binding a functional group (for example, a hydroxyl group (-OH) on the surface of silica, in the case of silica) on the surface of a carrier and a catalyst compound covalently.

In a specific example of the present invention, the olefin-based polymer may be a homopolymer of an olefin-based monomer or a copolymer of olefin-based monomer and comonomer. Preferably, the olefin-based polymer is a copolymer of an olefin-based monomer and an olefin-based comonomer.

Herein, the olefin-based monomer may be at least one selected from the group consisting of $C_{2-20}$ $\alpha$-olefin, $C_{1-20}$ diolefin, $C_{3-20}$ cycloolefin, and $C_{3-20}$ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, or 1-hexadecene, and the olefin-based polymer may be a homopolymer including only one or a copolymer including two or more of the olefin-based

monomers exemplified above.

In an exemplary embodiment, the olefin-based polymer may be a copolymer of ethylene and $C_{3-20}$ $\alpha$-olefin. Preferably, the olefin-based polymer may be a linear low-density polyethylene in which the olefin-based monomer is ethylene and the olefin-based comonomer is 1-hexene.

In this case, the content of ethylene is preferably 55 to 99.9 wt%, and more preferably 90 to 99.9 wt%. The content of the $\alpha$-olefin-based comonomer is preferably 0.1 to 45 wt%, and more preferably 0.1 to 10 wt%.

**Method for preparing olefin-based polymer**

According to an exemplary embodiment of the present invention, a method for preparing an olefin-based polymer including: polymerizing an olefin-based monomer in the presence of a hybrid catalyst including: at least one first transition metal compound represented by the following Chemical Formula 1; and at least one second transition metal compound represented by the following Chemical Formula 2, thereby obtaining an olefin-based polymer is provided:

[Chemical Formula 1]

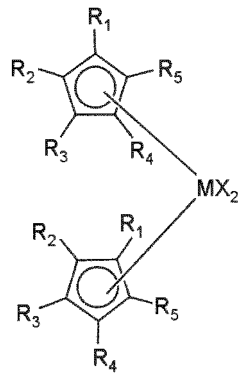

[Chemical Formula 2]

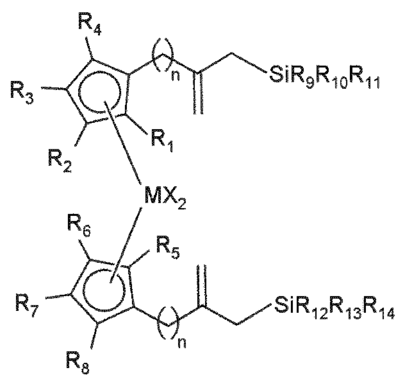

wherein n, M, X, $R_1$ to $R_8$, and $R_9$ to $R_{14}$ are as defined above in the item of "olefin-based polymer".

As described above, the olefin-based polymer prepared by the preparation method according to an exemplary embodiment of the present invention may have (1) a density of 0.915 to 0.935 g/cm$^3$, preferably 0.918 to 0.932 g/cm$^3$; (2) a ratio between a melt index ($I_{21.6}$) measured with a load of 21.6 kg and a melt index ($I_{2.16}$) measured with a load of 2.16 kg at 190°C (melt flow ratio; MFR) of 15 or more, preferably 15 to 40; and (3) a comonomer distribution slope (CDS) defined by the following Equation 1 of 1.0 or more, preferably 1.0 to 3.0:

[Equation 1]

$$\mathrm{CDS} = \frac{logC_{80} - logC_{20}}{logM_{80} - logM_{20}}$$

wherein $C_{20}$, $C_{80}$, $M_{20}$, and $M_{80}$ are as defined above in the item of "olefin-based polymer".

In a specific example of the present invention, the olefin-based polymer may be polymerized by a polymerization reaction such as free radical, cationic, coordination, condensation, and addition polymerization, but is not limited thereto.

In an exemplary embodiment of the present invention, the olefin-based polymer may be prepared by a gas phase polymerization method, a solution polymerization method, a slurry polymerization method, or the like. Preferably, the polymerization of the olefin-based monomer may be performed by slurry polymerization, and specifically, the polymerization of the olefin-based monomer may be performed in a slurry batch reactor.

When the olefin-based polymer is prepared by a solution polymerization method or a slurry polymerization method, an example of the solvent to be used may include a $C_{5-12}$ aliphatic hydrocarbon solvent such as pentane, hexane, heptane, nonane, decane, and isomers thereof; an aromatic hydrocarbon solvent such as toluene and benzene; a hydrocarbon solvent substituted with a chlorine atom such as dichloromethane and chlorobenzene; and a mixture thereof, but is not limited thereto.

[Best Mode for Carrying Out the Invention]

## Examples

Hereinafter, the present invention will be described in more detail through the following examples. However, the following examples are only illustrative of the present invention, and do not limit the scope of the present invention.

### Preparation Example

The transition metal compound of Chemical Formula 1-1 (bis[(1-butyl-3-methyl)cyclopentadienyl]zirconium dichloride) and the transition metal compound of Chemical Formula 1-2 (bis(n-butylcyclopentadienyl)zirconium dichloride) were purchased from TCI, and the transition metal compound of Chemical Formula 2-1 was prepared as follows.

### Preparation of 2-(trimethylsilylmethyl)-2-propen-1-ol

A potassium carbonate ($K_2CO_3$) aqueous solution (6.6 M, 14.4 mmol) was slowly added to a solution in which 2-(trimethylsilylmethyl)allyl acetate (2.69 g, 14.4 mmol) was dissolved in methanol (22 ml). After the addition, it was stirred at room temperature for 4 hours. After the stirring, water was added thereto to complete the reaction. Diethyl ether was used to extract an organic layer, and then the remaining water was removed with magnesium sulfate ($MgSO_4$). All solvents were removed under vacuum to obtain 1.51 g (72%) of a light ivory oil compound.

$^1$H-NMR ($CDCl_3$, 300 MHz): $\delta$ 4.90-4.88 (m, 1H), 4.66 (s, 1H), 3.97 (s, 2H), 1.53 (s, 2H), 0.03 (s, 9H).

### Preparation of 2-(trimethylsilylmethyl) methanesulfonate

Methanesulfonyl chloride (1.8 g, 15.7 mmol) was slowly added at 0°C to a solution in which 2-(trimethylsilylmethyl)-2-propen-1-ol (1.51 g, 10.5 mmol) and triethylamine (1.91 g, 18.8 mmol) were diluted with dichloromethane (30 ml). Thereafter, stirring was performed at 0°C for 3 hours. A sodium hydrogen carbonate ($NaHCO_3$) aqueous solution was added at 0°C to complete the reaction, and then extraction was performed with dichloromethane to separate an organic layer. The remaining water was removed with sodium sulfate ($Na_2SO_4$), and then all solvents were removed under vacuum to obtain 1.9 g (82%) of a yellow oil compound.

$^1$H-NMR ($CDCl_3$, 300 MHz): $\delta$5.03 (d, 1H), 4.84 (s, 1H) , 4.56 (s, 2H), 3.02 (s, 3H), 1.60 (s, 2H), 0.06 (s, 9H).

### Preparation of 2-(trimethylsilylmethyl)allyl bromide

A solution in which lithium bromide was dispersed in tetrahydrofuran (15 ml) was slowly added at room temperature to a solution in which 2-(trimethylsilylmethyl) methanesulfonate (1.9 g, 8.54 mmol) was diluted with 20 ml of tetrahydrofuran (THF), and then stirring was performed at 110°C for 4 hours. Distilled water was added at 0°C to complete the reaction, and then extraction was performed with diethyl ether to separate an organic layer. The remaining water

was removed with sodium sulfate ($Na_2SO_4$), and then all solvents were removed under vacuum to obtain 1.12 g (65%) of a yellow oil compound.

$^1$H-NMR ($CDCl_3$, 300 MHz): δ5.04 (s, 1H), 4.74 (d, 1H) , 3.90 (d, 2H), 1.72 (d, 2H), 0.05 (s, 9H).

Preparation of [2-(cyclopentadienylmethyl)allyl] trimethylsilane

Sodium cyclopentadienide (3.04 g, 6.49 mmol, 2M THF solution) was slowly added dropwise at -30°C to a solution in which 2-(trimethylsilylmethyl)allyl bromide (1.12 g, 5.41 mmol) was diluted with tetrahydrofuran (20 ml), the temperature was slowly raised to room temperature, and stirring was performed for 12 hours. Distilled water was added at 0°C to complete the reaction, and then extraction was performed with diethyl ether to separate an organic layer. The remaining water was removed with magnesium sulfate, and then separation was performed with column chromatography (hexane) to obtain 620 mg (60%) of a light ivory oil compound.

$^1$H-NMR ($CDCl_3$, 300 MHz): δ6.42-6.02 (m, 4H), 4.60-4.55 (m, 2H), 3.06-2.97 (m, 2H), 2.87-2.85 (m, 2H), 1.54 (s, 2H), 0.03 (d, 9H).

Preparation of [2-(trimethylsilylmethyl)allyl] cyclopentadienyl lithium

n-Butyllithium (n-BuLi) (1.44 g, 2.93 mmol, 1.6 M hexane solution) was slowly added at -30°C to a solution in which [2-(cyclopentadienylmethyl)allyl] trimethylsilane (620 mg, 3.22 mmol) was diluted with tetrahydrofuran (10 ml), the temperature was slowly raised to room temperature, and stirring was performed for 12 hours. The solvent of the reaction solution was dried under vacuum, hexane was added thereto, and stirring was performed for 15 minutes. A produced solid was filtered and dried under vacuum to obtain 528 mg (83%) of a light yellow solid compound.

Preparation of bis [(2-trimethylsilylmethylallyl) cyclopentadienyl] hafnium dichloride

A solution in which hafnium chloride ($HfCl_4$) (226 mg, 0.71 mmol) was dispersed in toluene (2 ml) was slowly added at -30°C to a solution in which [(2-trimethylsilylmethyl)allyl] cyclopentadienyl lithium (280 mg, 1.41 mmol) was diluted with toluene (3 ml), the temperature was slowly raised to room temperature, and stirring was performed for 12 hours. When the reaction was completed, the reaction solution was filtered, and the solvent of a filtrate was dried under vacuum. A produced solid was washed with hexane and dried to obtain 180 mg (41 %) of a white solid compound.

$^1$H-NMR ($CDCl_3$, 300 MHz) : δ6.21 (t, 2H), 6.12 (t, 2H), 4.54 (d, 2H), 4.44 (d, 1H), 3.28 (s, 2H), 1.52 (s, 2H), 0.05 (s, 9H).

Preparation of bis [(2-trimethylsilylmethylallyl)cyclopentadienyl] hafnium dimethyl

MeMgBr (3.93 g, 11.4 mmol, 3.0 M diethyl ether solution) was slowly added at -30°C to a solution in which bis[(2-trimethylsilylmethylallyl)cyclopentadienyl] hafnium dichloride (2.4 g, 3.79 mmol) was diluted with toluene (40 ml), the temperature was slowly raised to room temperature, and stirring was performed for 12 hours. After completing the reaction, extraction was performed with toluene and filtration was performed. Toluene was removed under vacuum, and washing with hexane and drying were performed to obtain 2.08 g (93 %) of a white solid compound.

Preparation Example 1

8.71 g of a 10% toluene solution of methylaluminoxane was added to 17.9 mg of the transition metal compound of Chemical Formula 1-1 and 57.0 mg of the transition metal compound of Chemical Formula 2-1, and the solution was stirred at room temperature for 1 hour. The resulting solution after the reaction was added to 1.94 g of silica (XPO-2402), 15 ml of toluene was further added, and stirring was performed at 70°C for 2 hours. The catalyst which had been supported was washed three times using 5 mL of toluene, and was dried overnight at 60°C under vacuum to obtain 2.80 g of a supported catalyst in a powder form.

Preparation Example 2

2.6 g of a supported catalyst was obtained in the same manner as in Preparation Example 1, except that 15.5 g of the transition metal compound of Chemical Formula 1-2 were used instead of the transition metal compound of Chemical formula 1-1.

Examples 1 to 8

Ethylene/1-hexene copolymers were prepared in the presence of the supported catalysts, each of which was obtained in Preparation Examples 1 and 2, using a slurry batch polymerization reactor. The polymerization conditions of the examples are summarized in the following Table 1:

[Table 1]

| Classification | Example 1 | Example 2 | Example 3 | Example 4 | Example 5 | Example 6 | Example 7 | Example 8 |
|---|---|---|---|---|---|---|---|---|
| Catalyst | Preparation Example 1 | Preparation Example 1 | Preparation Example 1 | Preparation Example 1 | Preparation Example 2 | Preparation Example 2 | Preparation Example 2 | Preparation Example 2 |
| Hydrogen injection | 0 | 1 | 3 | 5 | 0 | 1 | 3 | 5 |
| amount (ml/min) | | | | | | | | |
| 1-Hexene injection amount (ml) | 50 | 50 | 50 | 50 | 50 | 50 | 50 | 50 |
| Polymerization temperature (°C) | 80 | 80 | 80 | 80 | 80 | 80 | 80 | 80 |
| Polymerization pressure (bar) | 14 | 14 | 14 | 14 | 14 | 14 | 14 | 14 |
| Catalytic activity (gPE/gCat-hr) | 1,460 | 2,060 | 2,040 | 2,260 | 2,780 | 3,580 | 3,580 | 4,160 |

Comparative Examples 1 and 2

For comparison, linear low-density polyethylenes M1810HN (density: 0.9180 g/cm$^3$, melt index: 1.0 g/10 min; Comparative Example 1) and M2010EN (density: 0.9200 g/cm$^3$, melt index: 1.0 g/10 min; Comparative Example 2) available from Hanwha Solutions were used.

Test Example

The physical properties of the olefin-based polymer of the above examples were measured by the following methods and criteria. The results are shown in the following Tables 2 and the 3.

(1) Density

Measured according to ASTM D 1505.

(2) Melt index and melt index ratio (MFR)

The melt index was measured with a load of 21.6 kg and a load of 2.16 kg, respectively, at 190°C in accordance with ASTM D1238, and the ratio ($MI_{21.6}/MI_{2.16}$) was calculated.

(3) Comonomer distribution slope (CDS)

Measured at 170°C using gel permeation chromatography-FTIR (GPC-FTIR).

[Table 2]

| | Unit | Example 1 | Example 2 | Example 3 | Example 4 | Example 5 |
|---|---|---|---|---|---|---|
| Melt index | g/10 min | 0.08 | 0.31 | 0.44 | 1.46 | 1.5 |
| MFR | - | 25.4 | 20.4 | 21.4 | 23.5 | 16.9 |
| Density | g/cm$^3$ | 0.9204 | 0.9255 | 0.9265 | 0.9300 | 0.9250 |
| Mw | g/mol | 256,087 | 196,819 | 188,490 | 148,642 | 148,898 |
| Mw/Mn | - | 6.51 | 5.49 | 6.14 | 6.44 | 6.99 |
| CDS | - | 1.96 | 1.36 | 1.08 | 1.75 | 1.34 |

[Table 3]

| | Unit | Example 6 | Example 7 | Example 8 | Comparative Example 1 | Comparative Example 2 |
|---|---|---|---|---|---|---|
| Melt index | g/10 min | 2.04 | 2.28 | 4.04 | 0.29 | 0.003 |
| MFR | - | 17 | 16.1 | 18 | 20.7 | 403 |
| Density | g/cm$^3$ | 0.9287 | 0.9313 | 0.9323 | 0.9270 | 0.9165 |
| Mw | g/mol | 137,279 | 138,929 | 119,924 | 168,282 | 258,327 |
| Mw/Mn | - | 5.76 | 5.74 | 5.26 | 2.12 | 3.91 |
| CDS | - | 1.66 | 1.39 | 2.26 | 0.37 | 0.37 |

[Industrial Applicability]

Since the olefin-based polymer according to an exemplary embodiment of the present invention has a wide molecular weight distribution and thus has excellent processability, and has a relatively large number of short-chain branches in high molecular weight components, the olefin-based polymer has excellent mechanical strength and heat seal properties.

## Claims

1. An olefin-based polymer which has (1) a density of 0.915 to 0.935 g/cm$^3$; (2) a ratio between a melt index ($I_{21.6}$) measured with a load of 21.6 kg and a melt index ($I_{2.16}$) measured with a load of 2.16 kg at 190°C (melt flow ratio; MFR) of 15 or more; and (3) a comonomer distribution slope (CDS) defined by the following Equation 1 of 1.0 or more:

[Equation 1]

$$\mathrm{CDS} = \frac{logC_{80} - logC_{20}}{logM_{80} - logM_{20}}$$

wherein $C_{20}$ and $C_{80}$ are comonomer contents at points where cumulative weight fractions are 20% and 80%, respectively, in a comonomer distribution, and $M_{20}$ and $M_{80}$ are molecular weights at points where cumulative weight fractions are 20% and 80%, respectively, in a comonomer distribution.

2. The olefin-based polymer of claim 1, wherein the olefin-based polymer has (1) the density of 0.918 to 0.932 g/cm$^3$; (2) the MFR of 15 to 40; and (3) the CDS of 1.0 to 3.0.

**3.** The olefin-based polymer of claim 1, wherein the olefin-based polymer is prepared by polymerizing an olefin-based monomer in the presence of a hybrid catalyst including: at least one first transition metal compound represented by the following Chemical Formula 1; and at least one second transition metal compound represented by the following Chemical Formula 2:

[Chemical Formula 1]

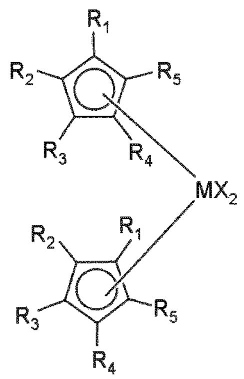

[Chemical Formula 2]

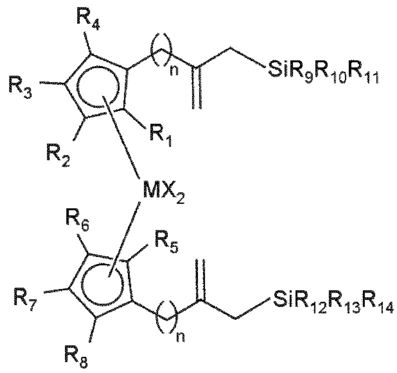

wherein n is independently of each other an integer of 1 to 20,
M is independently of each other titanium (Ti), zirconium (Zr), or hafnium (Hf),
X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,
$R_1$ to $R_8$ are independently of one another hydrogen, substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, and
$R_9$ to $R_{11}$ and $R_{12}$ to $R_{14}$ are independently of one another substituted or unsubstituted $C1_{-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, substituted or unsubstituted $C_{1-20}$ alkylidene, or substituted or unsubstituted $C_{1-20}$ silyl, but
$R_1$ to $R_8$ may be independently of one another connected to an adjacent group to form a substituted or unsubstituted and saturated or unsaturated $C_{4-20}$ ring.

**4.** The olefin-based polymer of claim 3, wherein M is zirconium or hafnium, respectively, X is halogen or $C_{1-20}$ alkyl, respectively, $R_1$ to $R_8$ are hydrogen, substituted or unsubstituted $C_{1-20}$ alkyl, substituted or unsubstituted $C_{1-20}$ alkenyl, or substituted or unsubstituted $C_{6-20}$ aryl, respectively, and $R_9$ to Rn and $R_{12}$ to $R_{14}$ are substituted or

unsubstituted $C_{1-20}$ alkyl, respectively.

**5.** The olefin-based polymer of claim 3, wherein the first transition metal compound is at least one of transition metal compounds represented by the following Chemical Formulae 1-1 to 1-3, and the second transition metal compound is a transition metal compound represented by the following Chemical Formula 2-1:

[Chemical Formula 1-1] [Chemical Formula 1-2]

[Chemical Formula 1-3]

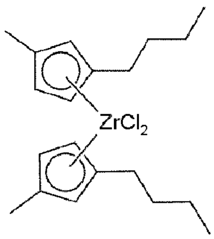
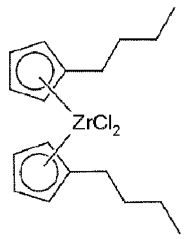
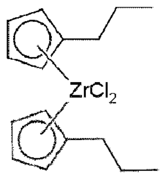

[Chemical Formula 2-1]

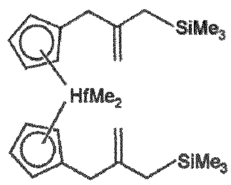

wherein Me is a methyl group.

**6.** The olefin-based polymer of claim 3, wherein a mole ratio of the first transition metal compound to the second transition metal compound is in a range of 100:1 to 1:100.

**7.** The olefin-based polymer of claim 3, wherein the catalyst comprises at least one cocatalyst compound selected from the group consisting of a compound represented by the following Chemical Formula 3, a compound represented by the following Chemical Formula 4, and a compound represented by the following Chemical Formula 5:

[Chemical Formula 3]

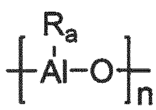

[Chemical Formula 4]

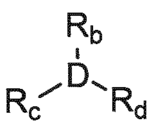

[Chemical Formula 5] $[L-H]^+[Z(A)_4]^-$ or $[L]^+[Z(A)_4]^-$

wherein n is an integer of 2 or more, $R_a$ is a halogen atom, a $C_{1-20}$ hydrocarbon group, or a C1-20 hydrocarbon group substituted with halogen,

D is aluminum (Al) or boron (B), $R_b$, $R_c$, and $R_d$ are independently of one another a halogen atom, a $C_{1-20}$ hydrocarbon group, a $C_{1-20}$ hydrocarbon group substituted with halogen, or a $C_{1-20}$ alkoxy group,

L is a neutral or cationic Lewis base, $[L\text{-}H]^+$ and $[L]^+$ are a Bronsted acid, Z is a group 13 element, and A is independently of each other a substituted or unsubstituted $C_{6-20}$ aryl group or a substituted or unsubstituted $C_{1-20}$ alkyl group.

**8.** The olefin-based polymer of claim 7, wherein the catalyst further comprises a carrier which supports the transition metal compound, the cocatalyst compound, or both of them.

**9.** The olefin-based polymer of claim 8, wherein the carrier comprises at least one selected from the group consisting of silica, alumina, and magnesia.

**10.** The olefin-based polymer of claim 8, wherein a total amount of the hybrid transition metal compound supported on the carrier is 0.001 to 1 mmol based on 1 g of the carrier, and a total amount of the cocatalyst compound supported on the carrier is 2 to 15 mmol based on 1 g of the carrier.

**11.** The olefin-based polymer of claim 1, wherein the olefin-based polymer is a copolymer of an olefin-based monomer and an olefin-based comonomer.

**12.** The olefin-based polymer of claim 11, wherein the olefin-based monomer is ethylene, and the olefin-based comonomer is one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

**13.** The olefin-based polymer of claim 12, wherein the olefin-based polymer is a linear low-density polyethylene in which the olefin-based monomer is ethylene and the olefin-based comonomer is 1-hexene.

**14.** A method for preparing an olefin-based polymer, the method comprising: polymerizing an olefin-based monomer in the presence of a hybrid catalyst including: at least one first transition metal compound represented by the following Chemical Formula 1; and at least one second transition metal compound represented by the following Chemical Formula 2, thereby obtaining an olefin-based polymer, wherein the olefin-based polymer has (1) a density of 0.915 to 0.935 $g/cm^3$; (2) a ratio between a melt index ($I_{21.6}$) measured with a load of 21.6 kg and a melt index ($I_{2.16}$) measured with a load of 2.16 kg at 190°C (melt flow ratio; MFR) of 15 or more; and (3) a comonomer distribution slope (CDS) defined by the following Equation 1 of 1.0 or more:

[Chemical Formula 1]

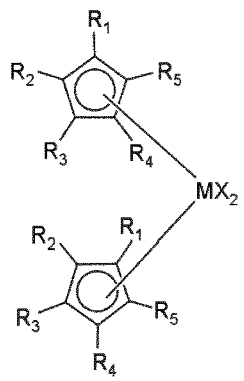

[Chemical Formula 2]

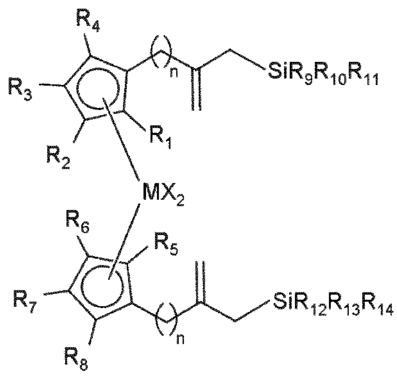

[Equation 1]

$$CDS = \frac{logC_{80} - logC_{20}}{logM_{80} - logM_{20}}$$

wherein n, M, X, $R_1$ to $R_8$, and $R_9$ to $R_{14}$ are as defined in claim 3, and $C_{20}$, $C_{80}$, $M_{20}$, and $M_{80}$ are as defined in claim 1.

**15.** The method for preparing an olefin-based polymer of claim 14, wherein the polymerization of the olefin-based monomer is performed by slurry polymerization.

[FIG. 1]

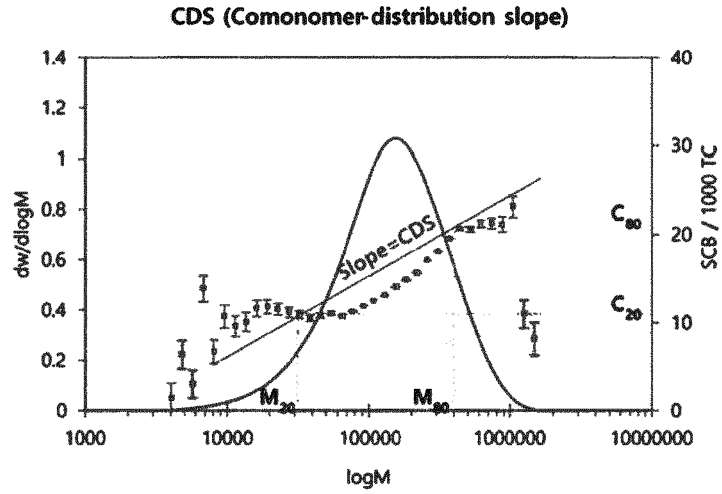
CDS (Comonomer-distribution slope)
dw/dlogM
SCB / 1000 TC
logM
Slope=CDS
$C_{80}$
$C_{20}$
$M_{20}$
$M_{80}$
1.4
1.2
1
0.8
0.6
0.4
0.2
0
40
30
20
10
0
1000
10000
100000
1000000
10000000

[FIG. 2]

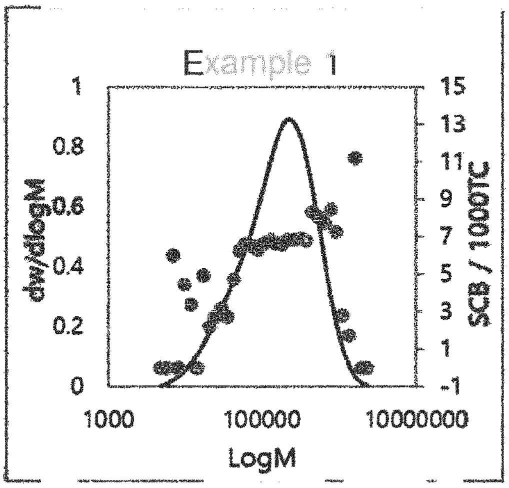
Example 1
dw/dlogM
SCB / 1000TC
LogM
1
0.8
0.6
0.4
0.2
0
15
13
11
9
7
5
3
1
-1
1000
100000
10000000

[FIG. 3]

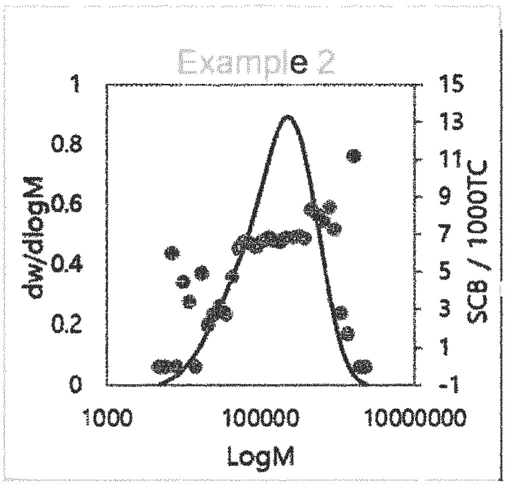
Example 2
dw/dlogM
SCB / 1000TC
LogM
1
0.8
0.6
0.4
0.2
0
15
13
11
9
7
5
3
1
-1
1000
100000
10000000

[FIG. 4]

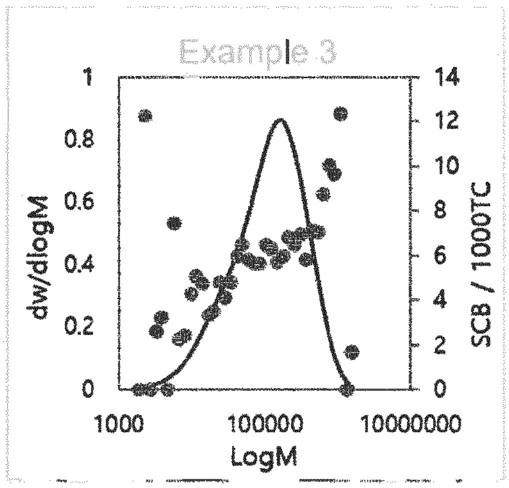
Example 3
dw/dlogM
SCB / 1000TC
LogM
1
0.8
0.6
0.4
0.2
0
14
12
10
8
6
4
2
0
1000
100000
10000000

[FIG. 5]

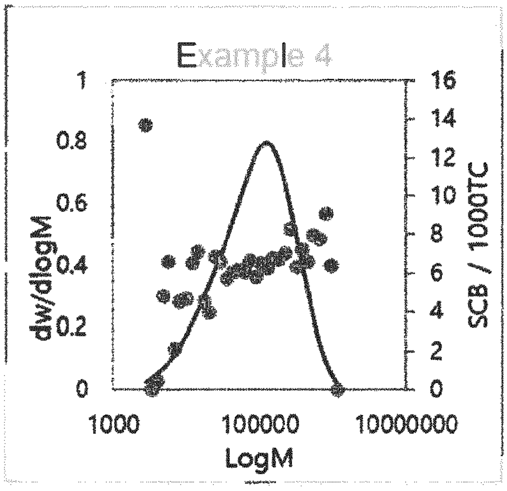
Example 4
dw/dlogM
SCB / 1000TC
LogM
1
0.8
0.6
0.4
0.2
0
16
14
12
10
8
6
4
2
0
1000
100000
10000000

[FIG. 6]

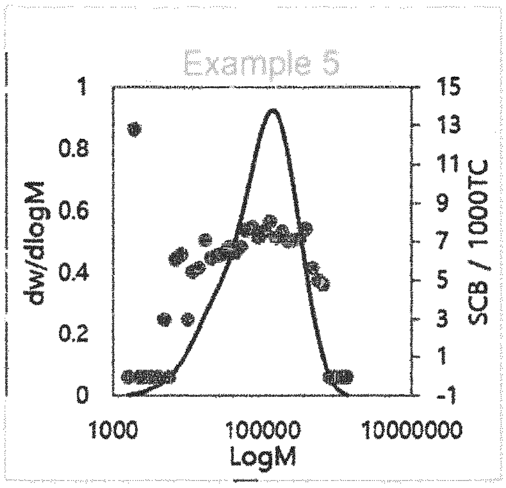
Example 5
dw/dlogM
SCB / 1000TC
LogM
1
0.8
0.6
0.4
0.2
0
15
13
11
9
7
5
3
1
-1
1000
100000
10000000

[FIG. 7]

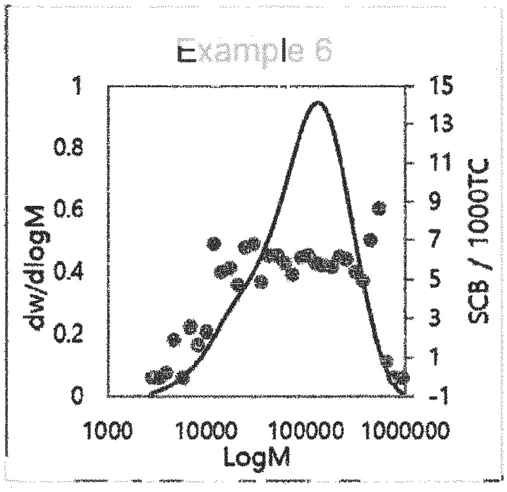
Example 6
dw/dlogM
SCB / 1000TC
LogM
1
0.8
0.6
0.4
0.2
0
15
13
11
9
7
5
3
1
-1
1000
10000
100000
1000000

[FIG. 8]

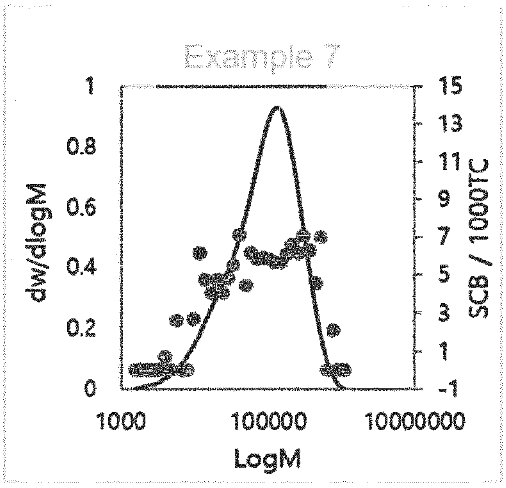
Example 7
dw/dlogM
SCB / 1000TC
LogM
1
0.8
0.6
0.4
0.2
0
15
13
11
9
7
5
3
1
-1
1000
100000
10000000

[FIG. 9]

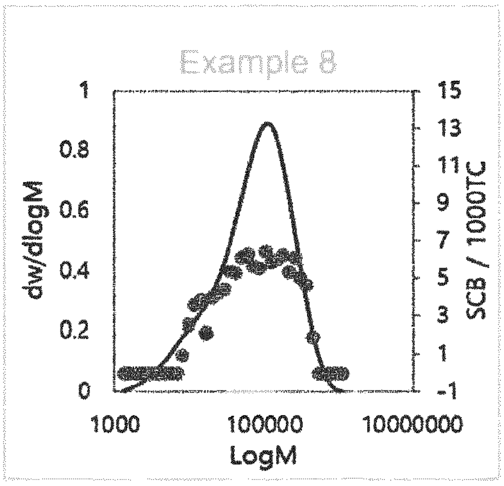
Example 8
dw/dlogM
SCB / 1000TC
LogM
1
0.8
0.6
0.4
0.2
0
15
13
11
9
7
5
3
1
-1
1000
100000
10000000

[FIG. 10]

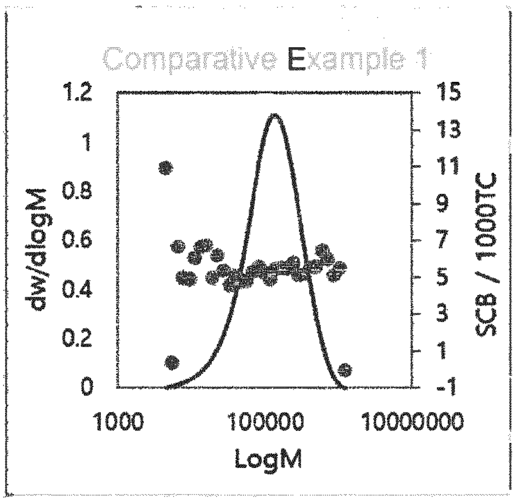
Comparative Example 1
dw/dlogM
SCB / 1000TC
LogM
1.2
1
0.8
0.6
0.4
0.2
0
15
13
11
9
7
5
3
1
-1
1000
100000
10000000

[FIG. 11]

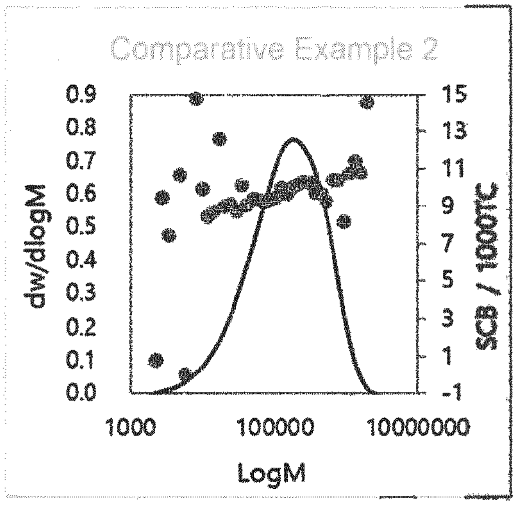
Comparative Example 2
dw/dlogM
SCB / 1000TC
LogM
0.9
0.8
0.7
0.6
0.5
0.4
0.3
0.2
0.1
0.0
15
13
11
9
7
5
3
1
-1
1000
100000
10000000

## INTERNATIONAL SEARCH REPORT

International application No.
**PCT/KR2021/018720**

### A. CLASSIFICATION OF SUBJECT MATTER

**C08F 210/16**(2006.01)i; **C08F 210/14**(2006.01)i; **C08F 4/659**(2006.01)i; **C08F 4/6592**(2006.01)i; **C08F 4/646**(2006.01)i; **C08F 4/02**(2006.01)i

According to International Patent Classification (IPC) or to both national classification and IPC

### B. FIELDS SEARCHED

Minimum documentation searched (classification system followed by classification symbols)

C08F 210/16(2006.01); B01J 21/02(2006.01); B01J 37/02(2006.01); C08F 10/00(2006.01); C08F 4/52(2006.01); C08F 4/642(2006.01); C08F 4/6592(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, CAplus) & keywords: 혼성(hybrid), 담지 촉매(supported catalyst), 전이금속(transition metal), 올레핀(olefin)

### C. DOCUMENTS CONSIDERED TO BE RELEVANT

| Category* | Citation of document, with indication, where appropriate, of the relevant passages | Relevant to claim No. |
|---|---|---|
| Y | US 2019-0040167 A1 (EXXONMOBIL CHEMICAL PATENTS INC.) 07 February 2019 (2019-02-07)<br>See claims 1, 4, 6, 8, 12 and 18-22; paragraphs [0005], [0109], [0115], [0194]-[0196] and [0199]; and table 1. | 1-15 |
| Y | KR 10-2020-0058768 A (HANWHA SOLUTIONS CORPORATION) 28 May 2020 (2020-05-28)<br>See claims 1, 4 and 12; and paragraph [0005]. | 1-15 |
| A | KR 10-2019-0096290 A (LG CHEM, LTD.) 19 August 2019 (2019-08-19)<br>See entire document. | 1-15 |
| A | KR 10-2013-0116395 A (SK INNOVATION CO., LTD. et al.) 24 October 2013 (2013-10-24)<br>See entire document. | 1-15 |
| A | WO 2018-151790 A1 (EXXONMOBIL CHEMICAL PATENTS INC.) 23 August 2018 (2018-08-23)<br>See entire document. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 March 2022** | **29 March 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/018720**

| Patent document cited in search report | Publication date (day/month/year) | Patent family member(s) | Publication date (day/month/year) |
|---|---|---|---|
| US 2019-0040167 A1 | 07 February 2019 | CN 111094366 A | 01 May 2020 |
| | | CN 111108130 A | 05 May 2020 |
| | | CN 111212857 A | 29 May 2020 |
| | | CN 111491959 A | 04 August 2020 |
| | | EP 3661975 A1 | 10 June 2020 |
| | | EP 3661975 A4 | 11 November 2020 |
| | | EP 3661981 A1 | 10 June 2020 |
| | | EP 3661984 A1 | 10 June 2020 |
| | | EP 3697822 A1 | 26 August 2020 |
| | | EP 3697822 A4 | 26 August 2020 |
| | | SG 11202000942 A | 27 February 2020 |
| | | SG 11202000989 A | 30 March 2020 |
| | | US 1046796 B2 | 29 June 2021 |
| | | US 10844150 B2 | 24 November 2020 |
| | | US 10913808 B2 | 09 February 2021 |
| | | US 2019-0040168 A1 | 07 February 2019 |
| | | US 2020-0165366 A1 | 28 May 2020 |
| | | US 2020-0231790 A1 | 23 July 2020 |
| | | WO 2019-027585 A1 | 07 February 2019 |
| | | WO 2019-027586 A1 | 07 February 2019 |
| | | WO 2019-027587 A1 | 07 February 2019 |
| | | WO 2019-027605 A1 | 07 February 2019 |
| KR 10-2020-0058768 A | 28 May 2020 | CN 113242863 A | 10 August 2021 |
| | | EP 3865516 A1 | 18 August 2021 |
| | | KR 10-2219407 B1 | 23 February 2021 |
| | | US 2022-0010039 A1 | 13 January 2022 |
| | | WO 2020-105922 A1 | 28 May 2020 |
| KR 10-2019-0096290 A | 19 August 2019 | CN 111491734 A | 04 August 2020 |
| | | EP 3714975 A1 | 30 September 2020 |
| | | KR 10-2342780 B1 | 23 December 2021 |
| | | US 1091569 B2 | 17 August 2021 |
| | | US 2020-0385497 A1 | 10 December 2020 |
| | | WO 2019-156482 A1 | 15 August 2019 |
| KR 10-2013-0116395 A | 24 October 2013 | CN 104159929 A | 19 November 2014 |
| | | CN 104159929 B | 07 December 2016 |
| | | KR 10-1827523 B1 | 22 March 2018 |
| | | US 2015-0025204 A1 | 22 January 2015 |
| | | US 9394388 B2 | 19 July 2016 |
| | | WO 2013-133595 A1 | 12 September 2013 |
| WO 2018-151790 A1 | 23 August 2018 | BR 112019016048 A2 | 31 March 2020 |
| | | CN 110312741 A | 08 October 2019 |
| | | EP 3583137 A1 | 25 December 2019 |
| | | SG 11201907045 A | 27 September 2019 |
| | | US 10479846 B2 | 19 November 2019 |
| | | US 2018-0237558 A1 | 23 August 2018 |

Form PCT/ISA/210 (patent family annex) (July 2019)